(19) Europäisches Patentamt

European Patent Office

Office européen des brevets

(11) Veröffentlichungsnummer : **0 106 066**
**B1**

# (12) EUROPÄISCHE PATENTSCHRIFT

(45) Veröffentlichungstag der Patentschrift :
04.05.88

(21) Anmeldenummer : 83108154.2

(22) Anmeldetag : 18.08.83

(51) Int. Cl.⁴ : **G 01 C 19/38, G 01 C 21/16**

(54) Gerät zur Bestimmung der Nordrichtung.

(30) Priorität : 10.09.82 DE 3233612

(43) Veröffentlichungstag der Anmeldung :
25.04.84 Patentblatt 84/17

(45) Bekanntmachung des Hinweises auf die Patenterteilung : 04.05.88 Patentblatt 88/18

(84) Benannte Vertragsstaaten :
CH DE FR GB LI

(56) Entgegenhaltungen :
FR-A- 2 403 544

(73) Patentinhaber : **Bodenseewerk Gerätetechnik GmbH
Alte Nussdorfer Strasse 15 Postfach 1120
D-7770 Überlingen/Bodensee (DE)**

(72) Erfinder : **Krogmann, Uwe
Zur Äsche 24
D-7770 Überlingen-Nussdorf (DE)**

(74) Vertreter : **Weisse, Jürgen, Dipl.-Phys. et al
Patentanwälte Dipl.-Phys. Jürgen Weisse Dipl.-Chem.
Dr. Rudolf Wolgast Bökenbusch 41 Postfach 11 03 86
D-5620 Velbert 11 Langenberg (DE)**

EP 0 106 066 B1

**Beschreibung**

Die Erfindung betrifft ein Gerät zur Bestimmung der Nordrichtung mittels einer auf die Horizontalkomponente der Erddrehgeschwindigkeit ansprechenden Fühleranordnung, enthaltend

(a) eine auf Drehgeschwindigkeiten ansprechende Fühleranordnung mit einer ersten und einer zweiten Eingangsachse, die senkrecht zueinander verlaufen,

(b) einen ersten und einen zweiten Lotfühler von denen der erste auf Lageabweichungen um die zweite Eingangsachse und der zweite auf Lageabweichungen um die erste Eingangsachse anspricht,

(c) Plattformmittel, die durch eine reale ausrichtbare Plattform oder durch äquivalente Mittel, z. B. durch eine in einem Rechner simulierte Plattform, repräsentiert sein können, die durch ein erstes und ein zweites Ausrichtsignal integrierend ausrichtbar sind,

(d) Mittel zur Erzeugung von plattformbezogenen Lotfühlersignalen, die auf die Plattformmittel bezogen sind und durch welche die Plattformmittel steuerbar sind, und

(e) Mittel zur Bestimmung des Azimutwinkels nach Nord aus den um die Eingangsachsen der Fühleranordnung wirksamen Komponenten der Erddrehgeschwindigkeit.

Durch die DE-PS 27 41 274 ist ein Gerät zur automatischen Bestimmung der Nordrichtung mit einem zweiachsigen Kreisel bekannt, dessen Drallachse im wesentlichen vertikal gehalten ist. Der Kreisel besitzt zwei Eingangsachsen, die zueinander und zu der Drallachse senkrecht verlaufen. Auf jeder der Eingangsachsen sitzt ein Lageabgriff und ein Drehmomenterzeuger. Das verstärkte Signal des auf der ersten Eingangsachse sitzenden Lageabgriffs ist auf den Drehmomenterzeuger der zweiten Eingangsachse geschaltet, und das Signal des auf der zweiten Eingangsachse sitzenden Lageabgriffs ist verstärkt auf den Drehmomenterzeuger der ersten Eingangsachse geschaltet. Auf diese Weise ist der Kreisel elektrisch gefesselt. Er spricht auf die in die Eingangsachsen fallenden Komponenten der Horizontalkomponente der Erddrehgeschwindigkeit an. Die den Drehmomenterzeugern zugeführten Signale sind diesen Komponenten proportional. Aus dem Verhältnis der Signale kann der Winkel bestimmt werden, den die eine der Eingangsachsen mit der Nordrichtung bildet. Dabei ist vorausgesetzt, daß die Drallachse des Kreisels genau vertikal ausgerichtet ist.

Durch die DE-PS 27 41 274 ist weiterhin bekannt, mit dem Gehäuse des Kreisels Beschleunigungsmesser zu verbinden, deren Empfindlichkeitsachsen parallel zu der ersten bzw. der zweiten Eingangsachse des Kreisels verlaufen. Wenn der Kreisel mit seiner Drallachse nicht genau vertikal angeordnet ist, liefern die Beschleunigungsmesser als Lotfühler Signale. Eine Signalverarbeitungsschaltung erhält die Kreiselsignale und die Signale der Lotfühler und bildet daraus nach geometrischen Beziehungen den « wahren », d. h. den auf eine horizontale Ebene bezogenen Azimutwinkel nach Nord.

Der Kreisel ist mit bestimmten systematischen Fehlern behaftet. Es ist bekannt (DE-AS 29 03 282), diese kreiselspezifischen Fehler wenigstens teilweise dadurch zu eliminieren, daß der Kreisel mit seinem Gehäuse um eine vertikale Achse aus einer 0°-Stellung in eine dagegen um 180°-Stellung verdrehbar ist. In beiden Stellungen werden die erhaltenen Kreiselsignale gespeichert. Durch geeignete Kombination der so gespeicherten Signale können für die weitere Signalverarbeitung Signale gewonnen werden, die hinsichtlich bestimmter Kreiselfehler kompensiert sind.

Durch die GB-PS 2 090 973 ist ein Gerät zur Bestimmung der Nordrichtung bekannt, bei welchem ein zweiachsiger Wendekreisel mit vertikaler Drallachse und zwei zueinander senkrechten, horizontalen Eingangsachsen auf einer kardanisch aufgehängten, horizontal ausrichtbaren Plattform angeordnet ist. Die Plattform trägt ein Paar von Lotfühlern, welche auf eine Neigung der Plattform um die eine bzw. die andere Eingangsachse des Wendekreisels ansprechen. Die Lotfühler steuern Stellmotore, durch welche die Plattform horizontal ausgerichtet wird. Der Wendekreisel ist nach Art der oben diskutierten DE-AS 27 41 274 aufgebaut. Bei dieser Anordnung erfolgt die Ausrichtung der Plattform unabhängig von dem Wendekreisel. Die Bestimmung der Nordrichtung benutzt Signale des Wendekreisels unabhängig von den Lotfühlersignalen.

Es ist weiterhin durch die DE-AS 21 57 438 eine kreiselstabilisierte Plattform bekannt, bei welcher auf der Plattform ein Paar von Lotfühlern in Form von Beschleunigungsmessern mit zueinander senkrechten, horizontalen Eingangsachsen angeordnet ist. Auf der Plattform sitzt weiterhin ein zweiachsiger freier Kreisel mit vertikaler Drallachse und zwei zueinander senkrechten Eingangsachsen. Die Signale der Lotfühler sind auf Drehmomenterzeuger geschaltet, die um die Eingangsachsen auf den Kreisel wirken. An Abgriffen des Kreisels werden Ausrichtsignale abgegriffen, welche über Stellmotoren die Plattform horizontal ausgerichtet halten. Es geht hier ausschließlich um die horizontale Ausrichtung und Stabilisierung der Plattform, die beispielsweise eine Schiffsradaranlage aufnehmen soll.

Durch die US-PS 3 220 266 ist eine Anordnung mit einem auf einer horizontalen Plattform angeordneten Kurskreisel bekannt. Der Kurskreisel hat eine horizontale, in Nord-Süd-Richtung weisende Drallachse. Die Plattform wird im Normalbetrieb durch Lotfühler horizontal ausgerichtet gehalten, deren Signale über Verstärker unmittelbar auf Stellmotore aufgeschaltet sind. Nur wenn die Lotfühlersignale bei Manövern einem bestimmten Schwellwert überschreiten, so daß die Plattform sich nach einem Scheinlot ausrichten würde, wird ein Lotkreisel mit vertikaler Drallachse wirksam, dessen Abgriffe über ein schwellwertbehaftetes Netzwerk mit den Stellmotoren der Plattform verbunden sind. Eine Kursinformation wird hier nur von dem Kurskreisel erhalten.

Die durch die Erddrehung hervorgerufenen Winkelgeschwindigkeitskomponenten sind relativ klein. Wenn ein Gerät zur Bestimmung der Nordrichtung aus diesen Winkelgeschwindigkeitskomponenten beispielsweise in einem Fahrzeug eingesetzt wird, so können in dem Fahrzeug durch Störbewegungen des Fahrzeugs Drehbewegungen um die Eingangsachsen des Kreisels auftreten, die um eine bis drei Größenordnungen über den Signalen liegen, die durch die Komponenten der Erddrehgeschwindigkeit hervorgerufen werden. Ein solches Gerät ist daher in Fahrzeugen oder sonstiger gestörter Umgebung zur Nordung nicht einsetzbar. Das gilt auch für ein Gerät nach der GB-PS 2 090 973, bei welchem der Wendekreisel auf einer Plattform sitzt, die durch Lotfühler horizontal gehalten wird.

Der Erfindung liegt die Aufgabe zugrunde, eine Gerät der eingangs definierten Art so auszugestalten, daß der Einfluß von Störbewegungen um die Eingangsachsen des Kreisels auf ein zulässiges Maß reduziert wird.

Erfindungsgemäß wird diese Aufgabe dadurch gelöst, daß

(f) die Ausrichtsignale jeweils einen von der Fühleranordnung gelieferten Anteil enthalten, welcher der Drehgeschwindigkeit um die betreffende Eingangsachse proportional ist, und dem das die Neigung um diese Eingangsachse wiedergebende Lotfühlersignal überlagert ist, und

(g) die Mittel zur Bestimmung des Azimutwinkels $\psi$ von den Komponenten der Erddrehgeschwindigkeit proportionalen, aus dem plattformbezogenen Lotfühlersignalen abgeleiteten Signalen beaufschlagt sind.

Die Ausrichtsignale werden somit von der Drehgeschwindigkeit um die Eingangsachsen des Kreisels bestimmt, und die Plattform wird durch den Kreisel stabilisiert. Abweichungen von der horizontalen Ausrichtung der Plattform werden durch die überlagerten Lotfühlersignale ausgeglichen. Es ergibt sich dadurch eine größere Unempfindlichkeit gegen Störschwingungen. Als Meßsignale, aus denen die Nordrichtung bestimmt wird, dienen von den Lotfühlersignalen abgeleitete Signale.

Bei der oben diskutierten GB-PS 2 090 973 erfolgt keine Stabilisierung der Plattform durch den Kreisel. Die Meßsignale werden nicht aus den Lotfühlersignalen abgeleitet, sondern wie bei der DE-AS 27 41 274 aus den auf die Drehmomenterzeuger überkreuz aufgeschalteten Signalen der Abgriffe des Kreisels.

Bei den Anordnungen nach der DE-AS 21 57 438 und der US-PS 3 220 266 dienen die Kreisel mit vertikaler Drallachse nur zur Stabilisierung der Plattform. Für Kursinformationen ist bei der US-PS 3 220 266 ein gesonderter Kurskreisel vorgesehen. Demgegenüber dient der Kreisel bei der erfindungsgemäßen Anordnung sowohl zur Stabilisierung der Plattform als auch in seiner Verknüpfung mit den Lotfühlern als Meßglied zur Bestimmung der Nordrichtung.

Ausgestaltungen der Erfindung sind Gegenstand der abhängigen Ansprüche.

Zwei Ausführungsbeispiele der Erfindung sind nachstehend unter Bezugnahme auf die zugehörigen Zeichnungen näher erläutert :

Fig. 1 ist eine schematisch-perspektivische Darstellung einer ersten Ausführungsform eines Gerätes zur Bestimmung der Nordrichtung.

Fig. 2 zeigt Netzwerke bei der Ausführung nach Fig. 1.

Fig. 3 ist eine schematisch-perspektivische Darstellung des zweiachsigen Wendekreisels bei einer zweiten Ausführungsform eines Geräts zur Bestimmung der Nordrichtung.

Fig. 4 ist eine Blockschaltbild der Signalverarbeitung bei der zweiten Ausführungsform.

Fig. 5 dient der Erläuterung der zweiten Ausführungsform und veranschaulicht die gegenseitige Lage der Koordinatensysteme.

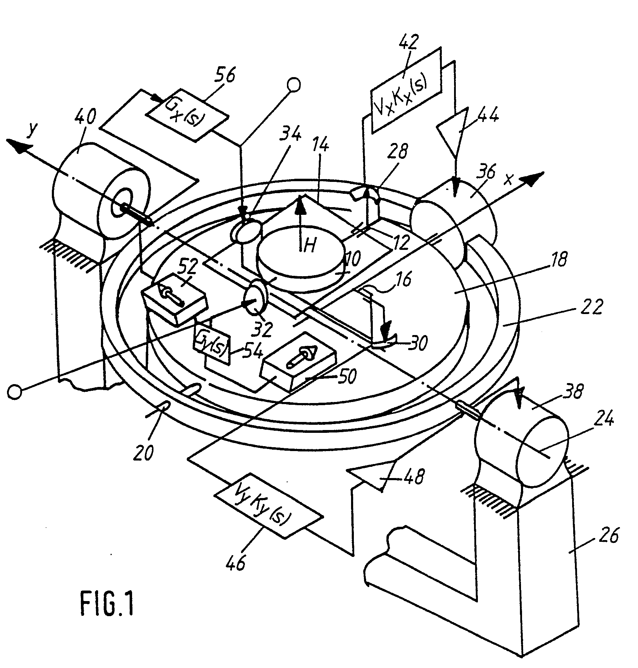

In Fig. 1 ist ein Kreisel 10 mit im wesentlichen vertikaler Drallachse H um eine erste Eingangsachse 12 schwenkbar in einem Rahmen 14 gelagert. Der Rahmen 14 ist um eine zweite Eingangsachse 16 auf einer Plattform 18 schwenkbar gelagert.

Die Plattform 18 ist um eine Achse 20 schwenkbar in einem Kardanring 22 gelagert. Der Kardanring 22 wiederum ist um eine Achse 24 schwenkbar in einem Außengehäuse 26 gelagert.

Die Achse 24 fällt mit der y-Achse eines Koordinatensystems zusammen. In dem in Fig. 1 dargestellten, abgeglichenen Zustand, in welchem die Plattform 18 horizontal ausgerichtet ist, fällt die Achse 20 mit der x-Achse des Koordinatensystems zusammen. In dieser Stellung ist weiterhin die erste Eingangsachse 12 des Kreisels 10 parallel zu der x-Achse, und die zweite Eingangsachse 16 des Kreisels 10 ist parallel zu der y-Achse.

Ein erster Lageabgriff 28 ist auf der ersten Eingangsachse 12 angeordnet. Ein zweiter Lageabgriff 30 ist auf der zweiten Eingangsachse 16 des Kreisels 10 angegeordnet. Ein erster Drehmomenterzeuger 32 ist um die erste Eingangsachse 12 des Kreisels 10 wirksam. Ein zweiter Drehmomenterzeuger 34 ist um die zweite Eingangsachse 16 des Kreisels 10 wirksam. Auf der ersten Achse 20 ist zwischen der Plattform 18 und dem Kardanrahmen 22 ein um die erste Achse 20 wirksamer erster Stellmotor 36 angeordnet. Auf der zweiten Achse 24 ist zwischen dem Kardanrahmen 22 und dem Außengehäuse 26 ein um die zweite Achse 24 wirksamer Stellmotor 38 angeordnet. Mit 40 ist ein Lager für den Kardanrahmen 22 auf der dem Stellmotor 38 gegenüberliegenden Seite bezeichnet.

Das Signal des ersten Lageabgriffs 28 ist über ein Netzwerk 42 und einen Leistungsverstärker 44 verstärkt auf den ersten Stellmotor 36 geschaltet. Das Signal des zweiten Lageabgriffs 30 ist über ein Netzwerk 46 und einen Verstärker 48 verstärkt auf den zweiten Stellmotor 38 geschaltet.

Auf der Plattform 18 sitzen ein erster Lotfühler 50 und ein zweiter Lotfühler 52 in Form von

0 106 066

Beschleunigungsmessern, deren Empfindlichkeitsachsen parallel zur x-Achse bzw. zur y-Achse verlaufen. Der erste Lotfühler spricht somit auf Lageabweichungen um die zweite Eingangsachse 16 an. Der zweite Lotfühler 52 spricht auf Lageabweichungen um die erste Eingangsachse 12 des Kreisels 10 an, wobei unterstellt ist, daß die Eingangsachsen 12 und 16 parallel zu den Kardanachsen 20 und 24 verlaufen. Das Signal des ersten Lotfühlers 50 ist verstärkt mit einer Übertragungsfunktion $G_y(s)$, die durch ein Netzwerk 54 erhalten wird, auf den ersten Drehmomenterzeuger 32 geschaltet. Das Signal des zweiten Lotfühlers 52 ist über ein Netzwerk 56 mit einer Übertragungsfunktion $G_x(s)$ verstärkt auf den zweiten Drehmomenterzeuger 34 geschaltet. Die den beiden Drehmomenterzeugern 32 und 34 zugeführten Signale sind auf übliche Mittel zur Bestimmung des Azimutwinkels $\psi$ geschaltet, wie sie beispielsweise in der DE-PS-27 41 274 beschrieben sind. Das unter Bezugnahme auf Fig. 1 beschriebene Gerät arbeitet wie folgt :

Wenn die Plattform 18 gegenüber der Horizontalen geneigt ist, liefern die Lotfühler 50 und/oder 52 Signale. Diese Signale sind auf die Drehmomenterzeuger 32 bzw. 34 geschaltet und bewirken ein Drehmoment auf den Kreisel um die erste Achse 12 bzw. die zweite Achse 16. Durch ein Drehmoment, das von dem Drehmomenterzeuger 32 um die erste Achse 12 erzeugt wird, wird der Kreisel 10 um die zweite Eingangsachse 16 ausgelenkt. Der Abgriff 30 erzeugt dadurch ein Signal, welches über das Netzwerk 46 und den Verstärker 48 auf den Stellmotor 38 gegeben wird. Dadurch wird die Plattform um die Achse 24 verdreht, solange bis der Lotfühler 50 horizontal steht und das Signal verschwindet. In ähnlicher Weise bewirkt ein Signal am Lotfühler 52 ein Drehmoment an dem um die zweite Eingangsachse 16 wirksamen Drehmomenterzeuger 34. Dieses Drehmoment bewirkt eine Auslenkung des Kreisels 10 um die erste Eingangsachse 12, so daß der Abgriff 28 ein Signal liefert. Dieses Signal steuert den Stellmotor 36, der die Plattform 18 um die Achse 20 horizontal ausrichtet. Die Plattform 18 wird daher ständig horizontal gehalten, so daß die Kreiseldrallachse H senkrecht bleibt. Wirken äußere Störungen in Form von Drehbewegungen an dem Außengehäuse 26, so würden diese äußeren Störungen bei ideal reibungsfreier Lagerung an der Plattform 18 gar nicht wirksam werden. Durch die Reibung werden jedoch Momente an der Plattform 18 wirksam. Eine dadurch hervorgerufene Auslenkung der Plattform 18 aus der Horizontalen, beispielsweise um die Achse 20 führt in der beschriebenen Weise zu einem Signal am Abgriff 28. Und der Stellmotor 36 erzeugt dann ein Gegenmoment, welches einer Mitnahme der Plattform 18 durch das Außengehäuse 26 entgegenwirkt. Um die Eingangsachsen 12 und 16 sind jedoch außerdem die Komponenten der Horizontalkomponente der Erddrehgeschwindigkeit wirksam. Da der Kreisel 10 seine Orientierung im inertialen Raum beizubehalten trachtet, würde dies zu einem langsamen Wegdrehen der Kreiseldrallachse H gegenüber der Vertikalen führen, wobei die Plattform 18 über die Abgriffe 28 und 30 und die Stellmotoren 36 und 38 dem Kreisel nachgeführt würde. Bei einer Auslenkung der Plattform 18 liefern jedoch die Lotfühler 50 und 52 Signale, die verstärkt auf die Drehmomenterzeuger 32 und 34 gegeben werden. Die von den Drehmomenterzeugern 32 und 34 ausgeübten Drehmomente lieten eine Drehbewegung des Kreisels 10 um die zweite Eingangsachse 16 bzw. die erste Eingangsachse 12 ein. Der Kreisel 10 wird dadurch mit den Komponenten der Erddrehgeschwindigkeit im inertialen Raum der Drehbewegung der Erde nachgeführt, so daß er seine Orientierung in einem erdfesten Koordinatensystem beibehält und die Signale der Lotfühler 50 und 52 praktisch auf Null gehalten werden. In Gleichgewichtszustand sind daher die den Drehmomenterzeugern 32 und 34 zugeführten Signale proportional den Komponenten der Erddrehgeschwindigkeit in Richtung der zweiten Eingangsachse 16 bzw. der ersten Eingangsachse 12.

Es läßt sich zeigen, daß auf diese Weise Signale entsprechend den Komponenten der Erddrehgeschwindigkeit in ähnlicher Weise wie bei der DE-PS 27 41 274 gewonnen werden können, aus denen der Azimutwinkel nach Nord bestimmt werden kann während andererseits eine ständig genau vertikale Orientierung der Drallachse H und eine weitgehende Entkopplung von äußeren Drehschwingungen gewährleistet ist. Ein Gerät der vorliegenden Art kann daher auch in einem Fahrzeug zur Bestimmung der Nordrichtung verwendet werden.

Im Sinne des allgemeinen Konzepts der vorliegenden Erfindung stellen die Drehmomenterzeuger 34 und 32 die ersten bzw. die zweiten Kompensationsmittel dar, durch welche der Einfluß der um die erste Eingangsachse 12 bzw. die zweite Eingangsachse 16 wirksamen Drehgeschwindigkeit auf die Lagewinkel der Plattform 18 mittels eines ersten bzw. zweiten Kompensationssignals kompensiert wird. Die Kompensationssignale sind dabei die von den Netzwerken 56 bzw. 54 gelieferten Signale. Die Mittel zur Erzeugung von plattformbezogenen Lotfühlersignalen bestehen hier einfach darin, daß die Lotfühler 50 und 52 unmittelbar auf der realen Plattform 18 montiert sind. Die plattformbezogenen Lotfühlersignale sind mit Übertragungsfunktionen $G_y(s)$ und $G_x(s)$ als kompensationssignale auf die ersten bzw. zweiten Kompensationsmittel, nämlich die Drehmomenterzeuger 32 bzw. 34 geschaltet. Der Azimutwinkel $\psi$ nach Nord wird aus den Signalen an den Drehmomenterzeugern 32 und 34 bestimmt, die den Komponenten der Erddrehgeschwindigkeit proportional sind und aus den Plattformbezogen Lotfühlersignalen abgeleitet sind.

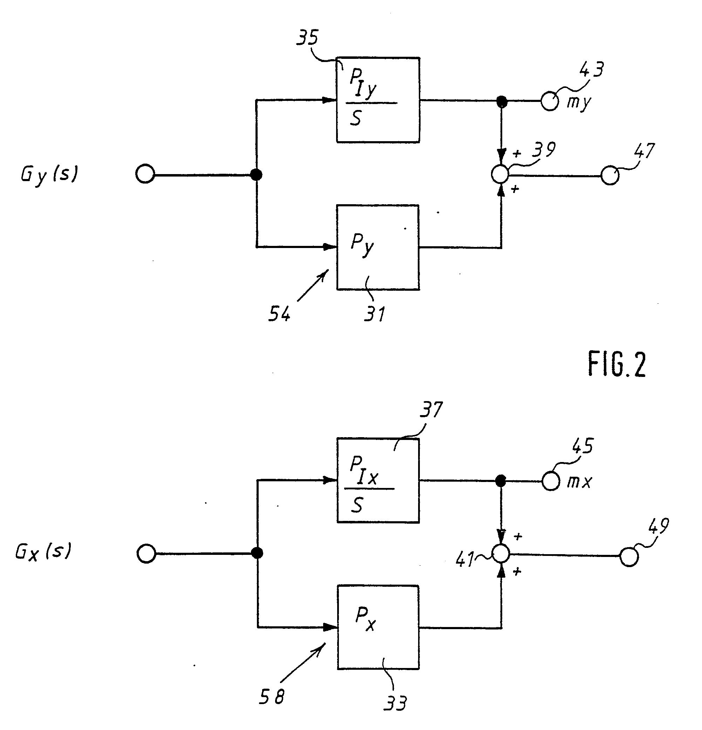

Fig. 2 zeigt den Aufbau der Netzwerke 54 und 58 von Fig. 1 mit den Übertragungsfunktionen $G_y(s)$ und $G_x(s)$. Dabei ist mit « s » die Variable der Laplacetransformierten bezeichnet. Jedes Netzwerk 54 und 58 enthält einen Verstärker 31 bzw. 33 mit einer Übertragungsfunktion $P_y$ bzw. $P_x$ und parallel dazu einen Integrator 35 bzw. 37 mit einer Übertragungsfunktion $P_{Iy}/s$ bzw. $P_{Ix}/s$. Die Ausgänge des Verstärkers 31 bzw. 33 und des Integrators 35 bzw. 37 sind jeweils in Summierpunkten 39 bzw. 41 überlagert. An den Integratoren 35 und 37 werden Signale $m_y$ bzw. $m_x$ an Ausgangsklemmen 43 bzw. 45 abgegriffen. Diese

4

Signale sind auf einen Nordabweichungsrechner zur Bestimmung des Azimutwinkels $\psi$ nach Nord geschaltet. Die Signale von den Summierpunkten 39 und 41, die an Ausgangsklemmen 47 bzw. 49 erscheinen, sind auf die Drehmomenterzeuger 32 und 34 geschaltet.

Es ist vorteilhafter, den Azimutwinkel $\psi$ nach Nord aus den Ausgangssignalen $m_x$ und $m_y$ der Integratoren 34 bzw. 37 der Netzwerke 54 bzw. 58 zu berechnen. Diese Signale sind im stationären Zustand ebenfalls den Komponenten der Erddrehgeschwindigkeit proportional, haben jedoch gegenüber den genannten Drehstörungen ein bessere Filterwirkung als die auf die Drehmomenterzeuger 32, 34 geschalteten Signale an den Ausgangsklemmen 47 und 49.

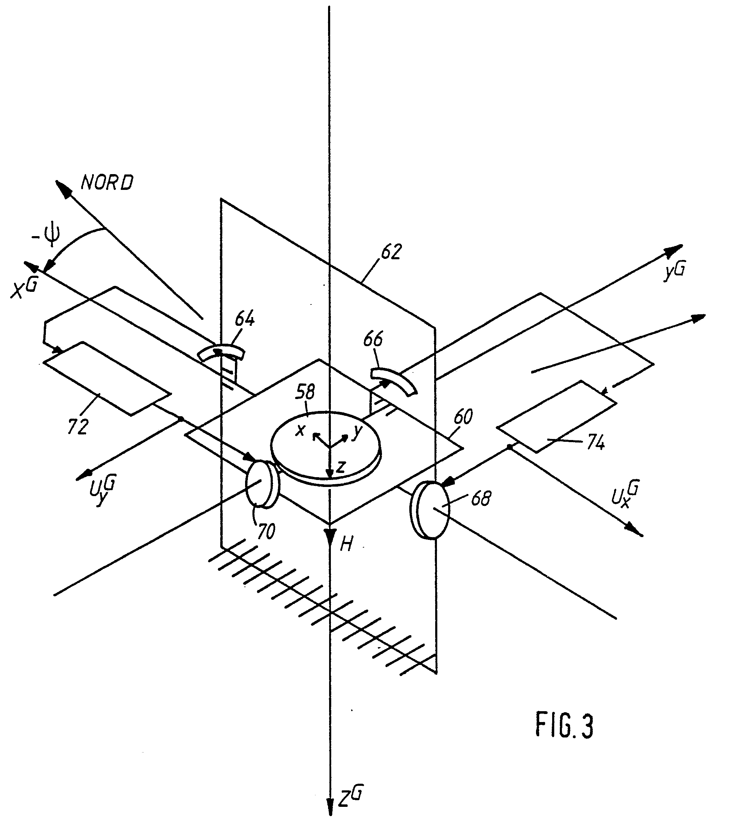

Bei der Ausführungsform nach Fig. 1 ist der Kreisel 10 auf einer realen, kardanisch aufgehängten und gestützten Plattform 18 angeordnet. Fig. 3 bis 5 zeigen eine Ausführungsform, bei welcher Kreisel und Lotfühler gehäusefest angeordnet sind und durch Rechenoperationen eine gedachte oder « virtuelle » Plattform definiert wird, welche die Funktion der Plattform 18 übernimmt.

Wie in Fig. 3 dargestellt ist, ist ein Kreisel 58 mit im wesentlichen vertikalem Kreiseldrall H vorgesehen. Der Kreisel hat eine erste Eingangsachse x und eine zweite Eingangsachse y. Er ist ähnlich wie der Kreisel 10 in Fig. 1 kardanisch gelagert. Der Kreisel 58 ist um die zweite Eingangsachse y schwenkbar in einem Kardanrahmen 60 gelagert. Der Kardanrahmen 60 ist um die erste Eingangsachse x schwenkbar in einem Außengehäuse 62 gelagert. Das Außengehäuse definiert ein gehäusefestes Koordinatensystem mit den Koordinatenachsen $x^G$, $y^G$ und $z^G$. In der dargestellten gefesselten Lage des Kreisels 58 fällt die erste Eingangsachse x mit der gehäusefesten $x^G$-Achse und die zweite Eingangsachse y mit der $y^G$-Achse zusammen. Auf der ersten Eingangsachse sitzt ein erster Lageabgriff 64, der auf die Bewegung des Kardanrahmens 60 gegenüber dem Außengehäuse 62 anspricht. Auf der zweiten Eingangsachse y sitzt ein zweiter Lageabgriff 66, der auf die Bewegung des Kreisels 58 gegenüber dem Kardanrahmen 60 um die zweite Eingangsachse y anspricht. Auf der ersten Eingangsachse sitzt weiterhin ein erster Drehmomenterzeuger 68, der ein Drehmoment um die Achse $x^G$ auf den Kardanrahmen 60 ausübt. Auf der zweiten Eingangsachse y sitzt ein zweiter Drehmomenterzeuger 70, der sich an dem Kardanrahmen 60 abstützt und ein Drehmoment auf den Kreisel 58 um die zweite Eingangsachse y ausübt.

Im Gegensatz zu der Anordnung von Fig. 1 ist hier (ähnlich wie bei der DE-PS 27 41 274) das Signal des ersten Lageabgriffs 64 über ein Verstärkernetzwerk 72 auf den zweiten Drehmomenterzeuger 70 geschaltet. Das Signal des zweiten Lageabgriffs 66 ist über ein Verstärkernetzwerk 74 auf den ersten Drehmomenterzeuger 68 geschaltet. Der Kreisel wirkt auf diese Weise als elektrisch gefesselter, zweiachsiger Wendekreisel. Er ist elektrisch an die dargestellte Lage gefesselt. Die den Drehmomenterzeugern 68 und 70 zugeführten Drehmomente entsprechen den an den beiden Eingangsachsen y bzw. x auftretenden Drehgeschwindigkeiten. Im Idealfall bei Abwesenheit von Störbewegungen sind das die beiden Komponenten der Horizontalkomponente der Erddrehgeschwindigkeit. Bei Verwendung des Geräts in gestörter Umgebung, z. B. in einem Fahrzeug, sind den Komponenten der Erddrehgeschwindigkeit Drehgeschwindigkeiten $\omega_x^G$ und $\omega_y^G$ um die Achsen $x^G$ bzw. $y^G$ überlagert, die ein Vielfaches der Erddrehgeschwindigkeitskomponenten sein können.

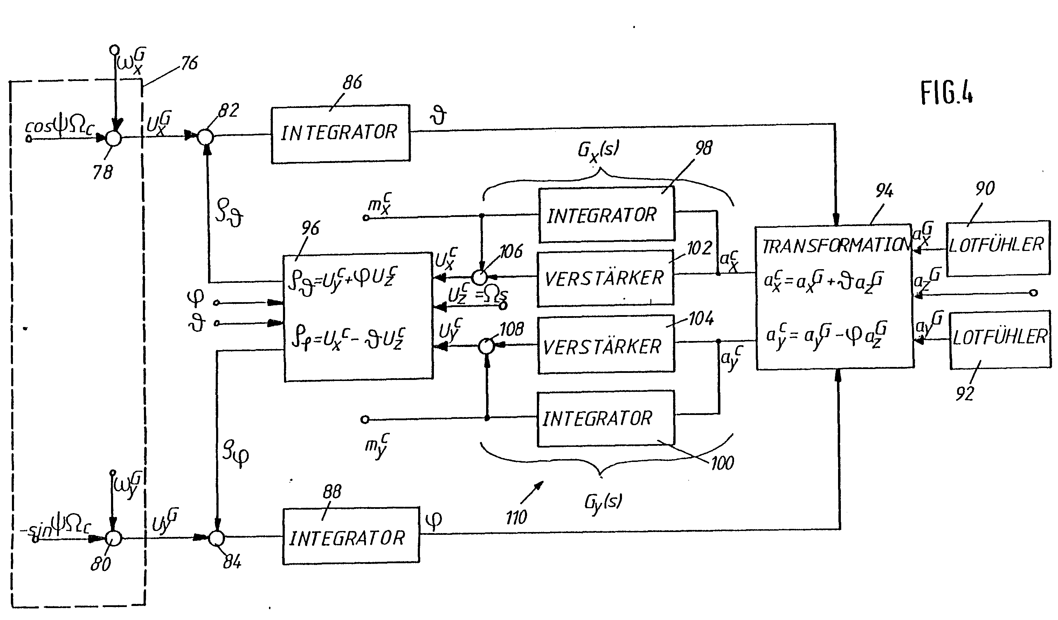

Das ist in Fig. 4 angedeutet, in welcher der gestrichelte Block die Kreiselanordnung von Fig. 2 darstellt. Den Komponenten $\cos\psi \cdot \Omega_c$ und $-\sin\psi \cdot \Omega_c$ der Horizontalkomponente $\Omega_c$ der Erddrehgeschwindigkeit sind, wid durch die Summierpunkte 78 und 80 angedeutet ist, die Drehgeschwindigkeiten $\omega_x^G$ und $\omega_y^G$ überlagert zur Bildung der tatsächlichen Ausgangssignale $U_x^G$ und $U_y^G$. Den so erhaltenen Signalen werden in Summierpunkten 82 bzw. 84 noch zu beschreibende Korrektursignale $\rho_\vartheta$ und $\rho_\varphi$ überlagert. Die so erhaltenen Signale werden durch integrierende Mittel in Form von Integratoren 86 bzw. 88 integriert und liefern Lagewinkel $\vartheta$ und $\varphi$ einer « virtuellen » Plattform.

Gehäusefest, also am Außengehäuse 62 angebracht mit Empfindlichkeitsachsen parallel zu den Achsen $x^G$ und $y^G$ sind Lotfühler z. B. in Form von Beschleunigungsmessern 90 bzw. 92, die Ausgangssignale $a_x^G$ und $a_y^G$ entsprechend den durch die Neigung des Außengehäuses 62 an den Lotfühlern auftretenden Erdbeschleunigungskomponenten liefern. Diese Ausgangssignale $a_x^G$ und $a_y^G$ sowie ein die Vertikalbeschleunigung $a_z^G$ darstellendes Signal sind als Eingangsgrößen auf erste Koordinatentransformationsmittel 94 geschaltet. Auf die ersten Koordinatentransformationsmittel sind weiterhin die Lagewinkelsignale $\vartheta$, $\varphi$ von den Integratoren 86 und 88 als Transformationsparameter aufgeschaltet. Die ersten Koordinatentransformationsmittel 94 erzeugen transformierte Lotfühlersignale $a_x^C$ und $a_y^C$ nach der Beziehung.

$$a_x^C = a_x^G + \vartheta a_z^G \tag{1}$$

$$a_y^C = a_y^G - \varphi a_z^G \tag{2}$$

Durch die ersten Koordinatentransformationsmittel werden die von den Lotfühlern gelieferten Beschleunigungssignale und die Vertikalbeschleunigung, die als Erdbeschleunigungskomponenten in dem gehäusefesten Koordinatensystem $x^G$, $y^G$, $z^G$ gegeben sind, in einen Koordinatensystem der virtuellen Plattform transformiert, die um die Lagewinkel $\vartheta$ und $\varphi$ um die y bzw. x-Achse gegenüber dem gehäusefesten Koordinatensystem verdreht ist. Wenn diese virtuelle Plattform genau horizontiert ist, dann müssen die Komponenten $a_x^C$ und $a_y^C$ verschwinden. Die erhaltenen Komponenten $a_x^C$ und $a_y^C$

liefern daher Regelabweichungssignale für die Horizontierung der virtuellen Plattform.

Die Ausgangsgrößen $a_x^C$ und $a_y^C$ werden über Netzwerke mit Übertragungsfunktionen $G_x(s)$ und $G_y(s)$ übertragen und liefern Stellgrößen $U_x^C$, $U_y^C$. Diese werden zusammen mit einer Größe

$$U_z^C = \Omega_s \,, \tag{3}$$

der Vertikalkomponente der Erddrehgeschwindigkeit, zweiten Koordinatentransformationsmitteln 96 als Eingangsgrößen zugeführt. Die Übertragungsmittel, auf welche die transformierten Lotfühlersignale $a_x^C$ und $a_y^C$ aufgeschaltet sind, enthalten erste bzw. zweite Integrationsmittel in Form von Integratoren 98 bzw. 100 und erste bzw. zweite Proportionalübertragungsmittel in Form von jeweils einem Verstärker 102 bzw. 104 sowie erste Additionsmittel 106 zur Addition der Ausgangssignale des Integrators 98 und des Verstärkers 102 zur Erzeugung des ersten Stellsignals $U_x^C$ und zweite Additionsmittel 108 zur Addition der Ausgangssignale des zweiten Integrators 100 und des zweiten Verstärkers 104 zur Erzeugung des zweiten Stellsignals $U_y^C$. Die Übertragungsmittel, die generell mit 110 bezeichnet sind, liefern einmal das erste und das zweite Stellsignal $U_x^C$ und $U_y^C$ und zum anderen ein erstes und ein zweites Meßsignal $m_x^C$ und $m_y^C$ zur Aufschaltung auf die Mittel zur Bestimmung des Azimutwinkels $\psi$ nach Nord.

Auf die zweiten Koordinatentransformationsmittel 96 sind die Lagewinkelsignale $\vartheta$ und $\varphi$ als Transformationsparameter aufgeschaltet. Sie bewirkten nach der Beziehung

$$\delta_\vartheta = U_y^C + \varphi U_z^C \tag{4}$$

$$\delta_\varphi = U_x^C - \vartheta U_z^C \tag{5}$$

eine Rücktransformation der Eingangsgrößen wie Vektorkomponenten in das gehäusefeste Koordinatensystem $x^G$, $y^G$, $z^G$. Die dabei erhaltenen Größen $\rho_\vartheta$ und $\rho_\varphi$ am Ausgang der zweiten Koordinatentransformationsmittel liefern die Korrektursignale, die in den Summierpunkten 82 und 84 den Kreiselsignalen überlagert werden.

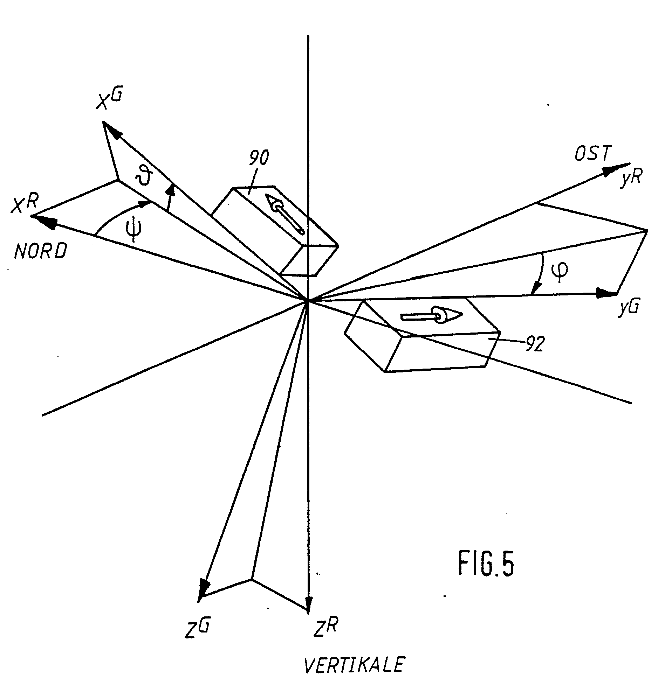

Fig. 5 zeigt die Lage des gehäusefesten Koordinatensystems und der Lotfühler 90 und 92 in Bezug auf ein erdfestes Koordinatensystem mit den Koordinatenachsen $x^R$ (Nord), $y^R$ (Ost) und $z^R$ (Vertikale).

Es läßt sich zeigen, daß die am Ausgang der Integratoren 98 und 100 erscheinenden Meßsignale $m_x^C$ und $m_y^C$ im stationären Zustand den Komponenten der Erddrehgeschwindigkeit bezogen auf ein Koordinatensystem der virtuellen Plattform entsprechen, aus denen sich dann nach Art der DE-PS 27 41 274 der wahre Azimutwinkel nach Nord bestimmen läßt.

Im stationären Zustand gilt für die Meßsignale

$$m_x^C/\text{stat} \sim \cos \psi \cdot \Omega_c$$

$$m_y^C/\text{stat} \sim - \sin \psi \cdot \Omega_c$$

Bei der im Zusammenhang mit Fig. 4 beschriebenen Anordnung wird nicht eine reale Plattform horizontal ausgerichtet. Vielmehr erfolgt im Rechner die Ausrichtung einer gedachten oder virtuellen Plattform. Die auf dieser virtuellen Plattform gemessenen Beschleunigungen $a_x^C$ und $a_y^C$ stellen Regelabweichungssignale dar, die über Integratoren 98, 100 und Verstärker 102, 104 zu Stellsignalen umgesetzt werden, welche die « Fehlausrichtung » der virtuellen Plattform durch entsprechende Drehgeschwindigkeiten korrigieren sollen. Diese Stellsignale müssen jedoch durch die zweiten Koordinatentransformationsmittel 96 noch in das gehäusefeste Koordinatensystem $x^G$, $y^G$ zurücktransformiert werden, da die Ausrichtbewegung der virtuellen Plattform in diesem Koordinatensystem erfolgt.

Im Sinne des allgemeinen Konzepts der vorliegenden Erfindung sind die ersten und zweiten Kompensationsmittel die Summierpunkte 82 und 84. Die Mittel zur Erzeugung von plattformbezogenen Lotfühlersignalen werden hier von den ersten Koordinatentransformationsmitteln 94 gebildet, welche die plattformbezogenen Lotfühlersignale $a_x^C$ und $a_y^C$ liefern. Die Mittel zur Aufschaltung dieser plattformbezogenen Lotfühlersignale mit Übertragungsfunktionen als Kompensationssignale auf die ersten bzw. zweiten Kompensationsmittel sind hier die Übertragungsmittel 110 und die zweiten Koordinatentransformationsmittel 96.

Vergleicht man die Ausführungsform nach Fig. 4 mit der Ausführungsform nach Fig. 1 so entsprechen die Integratoren 86 und 88 der Drehung der realen Plattform 18 um die x- bzw. y-Achse in Fig. 1. Die ersten Transformationsmittel 94, auf welche die Lagewinkel als Transformationsparameter aufgeschaltet sind, entsprechen dem Kardansystem mit den Stellmotoren 36 und 38. In Fig. 1 wird nicht eine virtuelle Plattform horizontal ausgerichtet sondern die reale Plattform 18. Die Übertragungsmittel 110 mit den Integratoren 98, 100 und Verstärkern 102, 104 entsprechen den Netzwerken 54 und 56 von Fig. 1. Die Aufschaltung von Signalen auf die Drehmomenterzeuger 32 und 34 von Fig. 1 findet ihre Entsprechung in den zweiten Koordinatentransformationsmitteln 96, die Drehgeschwindigkeiten liefern, die den um die Eingangsachsen wirksamen Drehgeschwindigkeiten überlagert werden. Diese überlagerten Drehgeschwindigkeiten entsprechen den Signalen $\rho_\vartheta$ und $\rho_\varphi$. Die Ausführung nach Fig. 4 entspricht daher im Grundprinzip der Ausführung von Fig. 1. Mechanische Bewegungen finden bei der Ausführung nach Fig. 4 nicht real statt sondern werden im Rechner simuliert.

Die DE-AS 29 03 282 lehrt, zur Kompensation bestimmter kreiselspezifischer Fehler den Kreisel um eine vertikale Achse aus einer 0°-Stellung in eine dagegen um 180° versetzte 180°-Stellung zu verdrehen, die erhaltenen Meßsignale zu speichern und in geeigneter Weise zur Kompensation kreiselspezifischer Fehler zu kombinieren. Das ist auch bei einer Anordnung nach Fig. 1 möglich. In diesem Falle ist es zweckmäßig, wenn das Außengehäuse 26 um eine vertikale Achse aus einer 0°-Stellung in eine dagegen um 180° versetzte 180°-Stellung verdrehbar ist. Es können dann Speichermittel zum Speichern der in den beiden Stellungen erhaltenen Meßsignale vorgesehen sein und weiterhin Mittel vorgesehen sein, durch welche die gespeicherten Signale zur Kompensation kreiselspezifischer Fehler kombinierbar sind. Es wäre auch möglich, statt des Außengehäuses 26 die Kreiselanordnung mit dem Kreisel 10 und dem Kardanrahmen 14 gegenüber der Plattform 18 in zwei um 180° gegeneinander versetzte Stellungen einzudrehen. In diesem Falle müßten allerdings die von dem Kreisel gelieferten Signale entsprechend dieser Verdrehung jeweils transformiert werden, um ein einwandfreies Funktionieren des vorstehend beschriebenen Ausrichtvorganges zu ermöglichen.

Bei der Anordnung nach Fig. 3 und 4 ist dies wie in der DE-AS 29 03 282 möglich.

Statt der in Fig. 1 und 3 dargestellten Kreisel kann auch eine andere auf Drehgeschwindigkeiten ansprechende Fühleranordnung vorgesehen sein. Solche Fühleranordnungen können z. B. mit optischen Drehgeschwindigkeitssensoren wie Ringlaserkreiseln, Fiberoptikkreiseln oder Kernspinresonanzkreiseln aufgebaut sein.

## Patentansprüche

1. Gerät zur Bestimmung den Nordrichtung mittels einer auf die Horizontalkomponente der Erddrehgeschwindigkeit ansprechenden Fühleranordnung, enthaltend

(a) eine auf Drehgeschwindigkeiten ansprechende Fühleranordnung (10, 76) mit einer ersten und einer zweiten Eingangsachse (12 ; $x^G$ bzw. 16 ; $y^G$), die senkrecht zueinander verlaufen,

(b) einen ersten und einen zweiten Lotfühler (50 ; 90 bzw. 52 ; 92), von denen der erste auf Lageabweichung um die zweite Eingangsachse (16, $y^G$) und der zweite auf Lageabweichung um die erste Eingangsachse (12, $x^G$) anspricht,

(c) Plattformmittel (18 ; ...), die durch eine reale ausrichtbare Plattform oder durch äquivalente Mittel, z. B. durch eine in einem Rechner simulierte Plattform, repräsentiert sein können, die durch ein erstes und zweites Ausrichtsignal integrierend ausrichtbar sind,

(d) Mittel (50, 52 ; 90, 92, 94) zur Erzeugung von plattformbezogenen Lotfühlersignalen ($a_x^c$, $a_y^c$), die auf die Plattformmittel (18, ...) bezogen sind und durch welche die Plattformmittel (18, ...) steuerbar sind, und

(e) Mittel zur Bestimmung des Azimutwinkels nach Nord aus den um die Eingangsachsen der Fühleranordnung wirksamen Komponenten der Erddrehgeschwindigkeit, dadurch gekennzeichnet, daß

(f) die Ausrichtsignale jeweils einen von der Fühleranordnung gelieferten Anteil enthalten, welcher der Drehgeschwindigkeit um die betreffende Eingangsachse proportional ist und dem das die Neigung um diese Eingangsachse wiedergebende Lotfühlersignal überlagert ist, und

(g) die Mittel zur Bestimmung des Azimutwinkels ($\psi$) von den Komponenten der Erddrehgeschwindigkeit proportionalen, aus den plattformbezogenen Lotfühlersignalen abgeleiteten Signalen beaufschlagt sind.

2. Gerät nach Anspruch 1, bei welchem die Fühleranordnung ein zweiachsiger Kreisel (10) mit im wesentlichen vertikaler Drallachse ist, zu der die Eingangsachsen (12, 16) senkrecht verlaufen, dadurch gekennzeichnet, daß

(a) ein erster Lageabgriff (28) auf der ersten Eingangsachse (12) und ein zweiter Lageabgriff (30) auf der zweiten Eingangsachse (16) des Kreisels (10) angeordnet ist,

(b) ein erster Drehmomenterzeuger (32) um die erste Eingangsachse (12) und ein zweiter Drehmomenterzeuger (34) um die zweite Eingangsachse (16) des Kreisels (10) wirksam ist,

(c) der zweiachsige Kreisel (10) auf einer kardanisch gelagerten Plattform (18) angeordnet ist, wobei

($c_1$) die Plattform (18) um eine erste Achse (20) in einem Kardanrahmen (22) gelagert ist,

($c_2$) der Kardanrahmen (22) um eine zu der ersten Achse (20) senkrechte zweite Achse (24) in einem Außengehäuse (26) gelagert ist,

($c_3$) auf der ersten Achse (20) zwischen der Plattform (18) und dem Kardanrahmen (22) ein um die erste Achse (20) wirksamer erster Stellmotor (36) angeordnet ist,

($c_4$) auf der zweiten Achse (24) zwischen dem Kardanrahmen (22) und dem Außengehäuse (26) ein um die zweite Achse (24) wirksamer Stellmotor (38) angeordnet ist,

(d) das Signal des ersten Lageabgriffs (28) verstärkt auf den ersten Stellmotor (36) geschaltet ist und das Signal des zweiten Lageabgriffs (30) verstärkt auf den zweiten Stellmotor (38) geschaltet ist,

(e) das Signal des ersten Lotfühlers (50) verstärkt auf den ersten Drehmomenterzeuger (32) und das Signal des zweiten Lotfühlers (52) verstärkt auf den zweiten Drehmomenterzeuger (34) geschaltet ist und

(f) die dem ersten und dem zweiten Drehmomenterzeuger (32, 34) zugeführten Signale auf die Mittel zur Bestimmung des Azimutwinkels geschaltet sind.

3. Gerät nach Anspruch 2, dadurch gekennzeichnet, daß

(a) das Außengehäuse (26) um eine vertikale Achse aus einer 0°-Stellung in eine dagegen um 180° versetzte 180°-Stellung verdrehbar ist,

(b) Speichermittel zum Speichern der in den beiden Stellungen erhaltenen Meßsignale vorgesehen sind und

(c) Mittel vorgesehen sind, durch welche die gespeicherten Signale zur Kompensation kreiselspezifischer Fehler kombinierbar sind.

4. Gerät nach Anspruch 1, gekennzeichnet durch

(a) einen zweiachsigen Wendekreisel (76) als besagte Fühleranordnung, der ein erstes und ein zweites Drehgeschwindigkeitssignal entsprechend der Drehgeschwindigkeit um die erste bzw. die zweite Eingangsachse liefert,

(b) Mittel (82, 84) zur Überlagerung eines Korrektursignals ($\rho_\vartheta$, $\rho_\varphi$) von jedem der besagten Drehgeschwindigkeitssignale,

(c) Integrationsmittel (86, 88) zum Integrieren der so korrigierten Drehgeschwindigkeitssignale zur Erzeugung von Lagewinkelsignalen ($\vartheta$, $\varphi$),

(d) erste Koordinatentransformationsmittel (94), auf welche die Signale ($a_x^G$, $a_y^G$) der Lotfühler (90, 92) sowie die Vertikalbeschleunigung ($a_z^G$) als Eingangsgrößen und die Lagewinkelsignale ($\vartheta$, $\varphi$) als Transformationsparameter aufgeschaltet sind, zur Erzeugung transformierter Lotfühlersignale ($a_x^C$, $a_y^C$),

(e) Übertragungsmittel (110), auf welche die transformierten Lotfühlersignale ($a_x^C$, $a_y^C$) aufgeschaltet sind zur Erzeugung

($e_1$) eines ersten und eines zweiten Meßsignals ($m_x^C$, $m_y^C$) zur Aufschaltung auf die Mittel zur Bestimmung des Azimutwinkels nach Nord und

($e_2$) eines ersten und eines zweiten Stellsignals ($U_x^C$, $U_y^C$)

(f) zweite Koordinatentransformationsmittel (96) auf welche das erste und das zweite Stellsignal ($U_x^C$, $U_y^C$) sowie die Vertikalkomponente ($U_z^C = \Omega_s$) der Erddrehgeschwindigkeit als Eingangsgrößen sowie die Lagewinkelsignale ($\vartheta$, $\varphi$) als Transformationsparameter aufgeschaltet sind zur Rücktransformation wie Vektorkomponenten in das gehäusefeste Koordinatensystem ($x^G$, $y^G$, $z^G$), wobei die zweiten Koordinatentransformationsmittel (96) die besagten Korrektursignale ($\rho_\vartheta$, $\rho_\varphi$) liefern.

5. Gerät nach Anspruch 4, dadurch gekennzeichnet, daß die Übertragungsmittel

(a) erste Integrationsmittel (98) und erste Proportionalübertragungsmittel (102) für das erste transformierte Lotfühlersignal der ersten Transformationsmittel (94) und

(b) zweite Integrationsmittel (100) und zweite Proportionalübertragungsmittel (104) für das zweite transformierte Lotfühlersignal der ersten Transformationsmittel (94) sowie

(c) erste Additionsmittel (106) zur Addition der Ausgangssignale der ersten Integrationsmittel (98) und der ersten Proportionalübertragungsmittel (102) zur Erzeugung eines ersten Stellsignals ($U_x^C$) und

(d) zweite Additionsmittel (108) zur Addition der Ausgangssignale der zweiten Integrationsmittel (100) und der zweiten Proportionalübertragungsmittel (104) zur Erzeugung eines zweiten Stellsignals ($U_y^C$) enthalten.

6. Gerät nach Anspruch 5, dadurch gekennzeichnet, daß das erste und das zweite Meßsignal ($m_x^C$, $m_y^C$) als Ausgangssignale der ersten bzw. der zweiten Integrationsmittel (98, 100) abgegriffen werden.

**Claims**

1. Instrument for the determination of the north direction by means of a sensor arrangement responding to the horizontal components of the rotary speed of the earth, comprising

(a) a sensor arrangement (10, 76) responding to angular rates with first and second input axes (12 ; $x^G$ and 16 ; $y^G$, respectively) mutually orthogonal,

(b) a first and a second vertical sensor (50 ; 90 and 52 ; 92, respectively), the first of which responds to attitude deviations about the second input axis (12, $x^G$),

(c) platform means (18 ; ...) which can be represented by a real platform arranged to be aligned or by equivalent means, for example by a platform simulated in a computer, and which are arranged to be integratlingly aligned by a first and a second aligning signal,

(d) means (50, 52 ; 90, 92, 94) for generating vertical sensor signals ($a_x^c$, $a_y^c$) referenced to the platform, which are referenced to the platform means (18, ...) and arranged to control the platform means (18, ...), and

(e) means for the determination of the azimuth angle to north from the components of the rotary speed of the earth acting about the input axes of the sensor arrangement, characterized in that

(f) the aligning signals each comprise a component supplied by the sensor arrangement, which component is proportional to the angular rate about the respective input axis, and to which the vertical sensor signal representing the inclination about this input axis is superimposed, and

(g) the means for the determination of the azimuth angle ($\psi$) have supplied thereto signals derived from the vertical sensor signals referenced to the platform and proportional to the components of the rotary speed of the earth.

2. Instrument as set forth in claims 1, in which the sensor arrangement is a two-axis gyro (10) with essentially vertical spin axis, to which the input axes (12, 16) extend perpendicularly, characterized in that

(a) a first position pick-off (28) is arranged on the first input axis (12) and a second position pick-off (30) is arranged on the second input axis (16) of the gyro (10),

(b) a first torquer (32) is acting about the first input axis (12) and a second torquer (34) is acting about the second input axis (16) of the gyro (10),

(c) the two-axis gyro (10) is arranged on a gimbal suspended platform (18)

($c_1$) the platform (18) being mounted in a gimbal (22) about a first axis (20),

($c_2$) the gimbal (22) being mounted in an outer housing (26) about a second axis (24) perpendicular to the first axis (20),

($c_3$) a first servomotor (36) acting about the first axis (20) being arranged on the first axis (20) between the platform (18) and the gimbal (22),

($c_4$) a second servomotor (38) acting about the second axis (24) being arranged on the second axis (24) between the gimbal (22) and the outer housing (26)

(d) the signal from the first position pick-off (28) is amplified and applied to the first servomotor (36) and the signal from the second position pick-off (30) is amplified and applied to the second servomotor (38),

(e) the signal from the first vertical sensor (50) is amplified and applied to the first torquer (32) and the signal from the second vertical sensor (52) is amplified and applied to the second torquer (34), and

(f) the signal supplied to the first and second torquers (32, 34) are applied to the means for the determination of the azimuth angle.

3. Instruments as set forth in claims 2, characterized in that

(a) the outer housing (26) is rotatable about a vertical axis from a 0°-position into a 180°-position offset with respect thereto by 180°,

(b) memory means for storing the measuring signals obtained in both positions are provided, and

(c) means are provided for combining the stored signals for compensation for gyro-specific errors.

4. Instruments as set forth in claim 1, characterized by

(a) a two-axis rate gyro (76) as said sensor arrangement, which supplies a first and a second angular rate signal corresponding to the angular rate about respectively the first and second input axes,

(b) means (82, 84) for superimposing a correction signal ($\rho_\vartheta$, $\rho_\varphi$) to each of the said angular rate signals.

(c) integrating means (86, 88) for integrating the thus corrected angular rate signal for generating attitude angle signals ($\vartheta$, $\varphi$),

(d) first coordinate transformation means (94), to which the signals ($a_x^G$, $a_x^G$) from the vertical sensors (90, 92) as well as the vertical acceleration ($a_z^G$) as input quantities and the attitude angle signals ($\vartheta$, $\varphi$) as transformation parameters are applied for generating transformed vertical sensor signals ($a_x^X$, $a_y^C$).

(e) transfer means (110), to which the transformed vertical sensor signals ($a_x^C$, $a_y^C$) are applied for generating

($e_1$) first and second measuring signals ($m_x^C$, $m_y^C$) for applying to the means for the determination of the azimuth angle to north and

($e_2$) first and second controlling signals ($U_x^C$, $U_y^C$)

(f) second coordinate transformation means (96), to which the first and the second controlling signals ($U_x^C$, $U_y^C$) as well as the vertical component ($U_z^C = \Omega_s$) of the rotary speed of the earth as input quantities and the attitude angle signals ($\vartheta$, $\varphi$) as transformation parameters are applied for inverse transformation like vector components into the housing-fixed coordinate system ($x^G$, $y^G$, $z^G$), the second coordinate transformation means (96) supplying the said correction signals ($\rho_\vartheta$, $\rho_\varphi$).

5. Instrument as set forth in claim 4, characterized in that the transfer means comprise

(a) first integrating means (98) and first proportional transfer means (102) for the first transformed vertical sensor signal from the first transformation means (94),

(b) second integrating means (100) and second proportional transfer means (104) for the second transformed vertical sensor signals from the first transformation means (94),

(c) first adding means (106) for adding the output signals from the first integrating means (98) and the first proportional transfer means (102) for generating a first controlling signal ($U_x^C$), and

(d) second adding means (108) for adding the output signals from the second integrating means (100) and the second proportional transfer means (104) for generating a second controlling signal ($U_y^C$).

6. Instrument as set forth in claim 5, characterized in that the first and the second measuring signals ($m_x^C$, $m_y^C$) are picked-off as output signals from respectively the first and the second integrating means (98, 100).

## Revendications

1. Appareil destiné à déterminer la direction du nord au moyen d'une disposition de capteur répondant à la composante horizontale de la vitesse de rotation terrestre, comprenant

(a) une disposition de capteur (10, 76) répondant à des vitesses de rotation et ayant un premier et un deuxième axe d'entrée (12 ; $x^G$ et 16 ; $y^G$, respectivement) s'étendant perpendiculairement l'un à l'autre,

(b) un premier et un deuxième capteur de la verticale (50 ; 90 et 52 ; 92 respectivement) dont le premier répond à la déviation d'orientation autour du deuxième axe d'entrée (16, $y_G$) et le deuxième répond à la déviation autour du premier axe d'entrée (12 ; $x^G$),

(c) des moyens de plateforme (18 ; ...) qui peuvent être représentés par une plateforme réellement alignable ou par des moyens équivalents, par exemple par une plateforme simulée dans un calculateur, et qui sont alignables de manière intégrante par un premier et un deuxième signal d'alignement,

(d) des moyens (50, 52 ; 90, 92, 94) destinés à engendrer des signaux de capteur de la verticale ($a_x^c$, $a_x^c$) se rapportant à la plateforme, qui sont rapportés aux moyens de la plateforme (18, ...) et qui peuvent commander les moyens de plateforme (18, ...), et

(e) des moyens destinés à déterminer l'angle d'azimut vers le nord des composantes de la vitesse de rotation terrestre agissant autour des axes d'entrée de la disposition de capteur, caractérisé par le fait que

(f) les signaux d'alignement comprennent chacun une composante fournie par la disposition de capteur et qui est proportionnelle à la vitesse de rotation autour de l'axe d'entrée respectif, et à laquelle le signal de capteur de la verticale représentant l'inclinaison autour de cet axe d'entrée est superposé, et

(g) les moyens destinés à déterminer l'angle d'azimut ($\psi$) sont exposés aux signaux proportionnels aux composantes de la vitesse de rotation terrestre, et déviés des signaux de capteur de la verticale rapportés à la plateforme.

2. Appareil selon la revendication 1, dans lequel la disposition de capteur est un gyroscope biaxial (10) ayant un axe de spin essentiellement vertical et auquel les axes d'entrée (12, 16) s'étendent essentiellement perpendiculairement, caractérisé par le fait que

(a) un premier capteur d'orientation (28) est disposé sur le premier axe d'entrée (12), et un deuxième capteur d'orientation (30) est disposé sur le deuxième axe d'entrée (16) du gyroscope (10),

(b) un premier générateur de couple (32) agit autour du premier axe d'entrée (12) et un deuxième générateur de couple (34) agit autour du deuxième axe d'entrée (16) du gyroscope (10),

(c) le gyroscope biaxial (10) est disposé sur une plateforme (18) montée à la Cardan,

($c_1$) la plateforme (18) est montée autour d'un premier axe (20) dans une suspension à la Cardan (22),

($c_2$) la suspension à la Cardan (22) est montée autour d'un deuxième axe (24) perpendiculaire au premier axe (20) dans un boîtier extérieur (26),

($c_3$) un premier servomoteur (36) agissant autour du premier axe (20) est disposé sur le premier axe (20) entre la plateforme (18) et la suspension à la Cardan (22),

($c_4$) un servomoteur (38) agissant autour du deuxième axe (24) est disposé sur le deuxième axe (24) entre la suspension à la Cardan (22) et le boîtier extérieur (26),

(d) le signal du premier capteur d'orientation (28) est appliqué de manière amplifiée au premier servomoteur (36), et le signal du deuxième capteur d'orientation (30) est appliqué de manière amplifiée au deuxième servomoteur (38),

(e) le signal du premier capteur de la verticale (50) est appliqué de manière amplifiée au premier générateur de couple (32), et le signal du deuxième capteur de la verticale (52) est appliqué de manière amplifiée au deuxième générateur de couple (34), et

(f) les signaux amenés au premier et au deuxième générateur de couple (32, 34) sont appliqués aux moyens destinés à déterminer l'angle d'azimut.

3. Appareil selon la revendication 2, caractérisé par le fait que

(a) le boîtier extérieur (26) est rotatif autour d'un axe vertical d'une position 0° dans une position 180° déplacée de 180° par rapport à celle-ci,

(b) des moyens de mémorisation destinés à mémoriser les signaux de mesure obtenus dans les deux positions, sont prévus, et

(c) des moyens sont prévus par lesquels les signaux mémorisés sont combinables pour la compensation d'erreurs spécifiques au gyroscope.

4. Appareil selon la revendication 1, caractérisé par

(a) un gyromètre (76) biaxial comme disposition de capteur, qui fournit un premier et un deuxième signal de vitesse de rotation conformément à la vitesse de rotation autour du premier et du deuxième axe d'entrée, respectivement,

(b) des moyens (82, 84) destinés à superposer un signal de correction ($\rho_\vartheta$, $\rho_\varphi$) à chacun desdits signaux de vitesse de rotation,

(c) des moyens d'intégration (86, 88) destinés à intégrer les signaux de vitesse de rotation ainsi corrigés pour engendrer des signaux d'angle d'orientation ($\vartheta$, $\varphi$),

(d) des premiers moyens des transformation de coordonnées (94) auxquels sont appliqués les signaux ($a_x^G$, $a_y^G$) des capteurs de la verticale (90, 92) ainsi que l'accélération verticale ($a_z^G$) comme grandeurs d'entrée et les signaux d'angle d'orientation ($\vartheta$, $\varphi$) comme paramètres de transformation, afin d'engendrer des signaux de capteur de la verticale transformés ($a_x^C$, $a_y^C$),

(e) des moyens de transmission (110) auxquels sont appliqués les signaux de capteur de la verticale ($a_x^C$, $a_y^C$) transformés afin d'engendrer

(e$_1$) un premier et un deuxième signal de mesure ($m_x^C$, $m_y^C$) pour les appliquer aux moyens destinés à déterminer l'angle d'azimut vers le nord, et

(e$_2$) un premier et un deuxième signal de commande ($U_x^C$, $U_y^C$)

(f) des deuxièmes moyens de transformation de coordonnées (96) auxquels sont appliqués le premier et le deuxième signal de commande ($U_x^C$, $U_y^C$) ainsi que la composante verticale ($U_z^C = \Omega_s$) de la vitesse de rotation terrestre comme grandeurs d'entrée, et les signaux d'angle d'orientation ($\vartheta$, $\varphi$) comme paramètres de transformation pour la retransformation comme des composantes de vecteur dans le système des coordonnées ($x^G$, $y^G$, $z^G$) fixe par rapport au boîtier, les deuxièmes moyens de transformation de coordonnées (96) fournissant lesdits signaux de correction ($\rho_\vartheta$, $\rho_\varphi$).

5. Appareil selon la revendication 4, caractérisé par le fait que les moyens de transmission comprennent

(a) des premiers moyens d'intégration (98) et des premiers moyens de transmission proportionnelle (102) pour le premier signal de capteur de la verticale transformé des premiers moyens de transformation (94), et

(b) des deuxièmes moyens d'intégration (100) et des deuxièmes moyens de transmission proportionnelle (104) pour le deuxième signal de capteur de la verticale transformé des premiers moyens de transformation (94), ainsi que

(c) des premiers moyens d'addition (106) pour l'addition des signaux de sortie des premiers moyens d'intégration (98) et des premiers moyens de transmission proportionnelle (102) afin d'engendrer un premier signal de commande ($U_x^C$), et

(d) des deuxièmes moyens d'addition (108) pour l'addition des signaux de sortie des deuxièmes moyens d'intégration (100) et des deuxièmes moyens de transmission proportionnelle (104) afin d'engendrer un deuxième signal de commande ($U_y^C$).

6. Appareil selon la revendication 5, caractérisé par le fait que le premier et le deuxième signal de mesure ($m_x^C$, $m_y^C$) sont captés comme signaux de sortie des premiers et des deuxièmes moyens d'intégration, respectivement (98, 100).

11

FIG.1

FIG.2

FIG.3

FIG.4

LOTFÜHLER 90

LOTFÜHLER 92

TRANSFORMATION 94

$a_x^G$

$a_z^G$

$a_y^G$

$a_x^C = a_x^G + \vartheta a_z^G$

$a_y^C = a_y^G - \varphi a_z^G$

$a_x^C$

$a_y^C$

INTEGRATOR 98

VERSTÄRKER 102

VERSTÄRKER 104

INTEGRATOR 100

$G_x(s)$

$G_y(s)$

106

$u_z^C = \Omega_S$

108

110

$u_x^C$

$u_z^C = \Omega_S$

$u_y^C$

$m_x^C$

$P_\vartheta = u_y^C + \varphi u_z^C$

$P_\varphi = u_x^C - \vartheta u_z^C$

96

$m_y^C$

INTEGRATOR 86

$\vartheta$

INTEGRATOR 88

$\varphi$

$\varphi$  $\vartheta$

82

$\beta_\vartheta$

$\beta_\varphi$

84

76

$u_x^G$

$u_y^G$

$\omega_x^G$

$u_x^G$

$u_y^G$

$\omega_y^G$

$\cos\psi \, \Omega_C$

78

$-\sin\psi \, \Omega_C$

80

4

FIG.5